# EUROPEAN PATENT APPLICATION

(11) **EP 4 467 005 A2**
(43) Date of publication of application: **27.11.2024**
(21) Application number: 24198324.6
(22) Date of filing: 24.08.2022
(51) Int. Cl.: A23L 27/00, A23L 17/60, A23L 13/00

(54) **SEAWEED-BASED FLAVOURING COMPOSITIONS**

(62) Divisional of application: 22769178.9
(71) Applicant: Symrise AG, 37603 Holzminden (DE)
(72) Inventor: Friedl, Thomas, 33034 Brakel (DE); Koch, Jens, 37632 Eschershausen (DE); Sabater, Christopher, 37603 Holzminden (DE)
(74) Representative: Eisenführ Speiser

(57) **Abstract**

The invention relates to a flavour composition for imparting or enhancing a savoury and/or meaty flavour, to a method for producing a flavour composition, to a flavour composition produced by such a method, to a semi-finished product comprising such a flavour composition, to the use of such a flavour composition for imparting or enhancing a savoury and/or meaty flavour in a semi-finished product and to a method for imparting or enhancing a savoury and/or meaty flavour in a semi-finished product.

## Description

The invention relates to a flavour composition for imparting or enhancing a savoury and/or meaty flavour, to a method for producing a flavour composition, to a flavour composition produced by such a method, to a semi-finished product comprising such a flavour composition, to the use of such a flavour composition for imparting or enhancing a savoury and/or meaty flavour in a semi-finished product and to a method for imparting or enhancing a savoury and/or meaty flavour in a semi-finished product.

Further aspects of the present invention or in connection therewith as well as preferred embodiments will be described below as well as in the attached claims.

An increasing number of people rearranges their type of nutrition to a meat-free or meat-reduced nutrition. Several forms and lifestyles have developed, ranging from a general reduction of meat in the daily food to a vegetarian or vegan nutrition.

The underlying reasons vary broadly from ethical aspects over religious or cultural conviction up to general well-being and health reasons as well as environmental aspects. As in a majority of cases, the taste of meat and meat products itself is not the cause for reducing / avoiding meat and is frequently still perceived as a pleasant taste, many people are searching for alternative food products which are meat-free but still provide a meat or meat-like taste.

For some time, the food industry has started to develop and provide meat-free food products for replacing meat in the daily nutrition. Usually, these alternatives are protein-based products, which contain flavour compositions to provide a meat-like taste.

Such flavour compositions, which can be applied in a variety of applications to provide a meat-like taste, are highly desired in the food industry.

Meanwhile, several sources have been used for providing a meat-like taste, including beans, peas, soybean or seaweed. However, the taste of meat is a rather complex taste. Thus, to provide a meat-like taste with meat-free products, several taste descriptors need to be adapted. These descriptors range from "meaty", "fatty", "brothy" or "juicy" to "roasted", "umami" or "mouthfeel" and further descriptors. Furthermore, it is often observed that a meat-like taste can be approximated, however, additional off-notes are frequently present, which need to be avoided.

Even though a high interest and effort exists in optimizing the meat-like taste, such products still provide several undesired / unpleasant taste impressions and thus reduce the pleasure of meat-free or meat-reduced nutrition.

Therefore, a high need exists for improving the possibilities of imitating the complex taste of meat to enable a meat-free or meat-reduced nutrition without renouncing the original taste of meat. Thus, a high need exists for improved flavour compositions, which impart or enhance a savoury and/or meaty flavour.

It was thus a primary object of the present invention to improve the gustatory quality of flavour compositions, which shall provide a meat-like taste. Particularly, an object of the present invention was to provide novel preparations, which impart and/or enhance a meat-like taste, preferably with reduced undesired / unpleasant taste impressions, which are currently perceived in flavour compositions and products including such flavour compositions, which shall provide a meat-like taste.

Further objects underlying the present invention become apparent from the following description including examples and the advantageous effects mentioned therein.

The primary object of the present invention is achieved by a flavour composition for imparting or enhancing a savoury and/or meaty flavour, preferably comprising a seaweed concentrate or product derived therefrom,
the composition comprising at least three components, preferably at least four components, preferably all components, selected from the group consisting of 2-methylbutyraldehyde, 5-methylfurfural, furfural, 2(E)-decenal, and isobutyr aldehyde.

It is preferred that the flavour composition further comprises myristic acid and/or palmitic acid.

Additionally or alternatively, it is preferred that the flavour composition further comprises lauric acid and/or oleic acid.

Furthermore, it is preferred that the flavour composition comprises
a) 2-methylbutyraldehyde,
b) 5-methylfurfural,
c) furfural,
d) 2(E)-decenal,
e) isobutyr aldehyde,
f) myristic acid,
g) palmitic acid, and
h) optionally: lauric acid,
i) optionally: oleic acid, and

wherein the summed amount of compounds a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the composition,
wherein the summed amount of compounds f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition,
preferably wherein the summed amount of compounds a) to e) is at least 5 wt.-%, preferably at least 7.5 wt.-%, preferably at least 10 wt.-%, preferably at least 15 wt.-%,preferably at least 20 wt.-%, preferably at least 25 wt.-%, preferably at least 30 wt.-%, preferably at least 35 wt.-%, based on the total weight of the composition, and
preferably wherein the summed amount of compounds f) to i) is at most 50 wt.-%, preferably at most 45 wt.-%, preferably at most 40 wt.-%, preferably at most 35 wt.-%, preferably at most 30 wt.-%, preferably at most 25 wt.-%; preferably at most 20 wt.-%, preferably at most 15 wt.-%, based on the total weight of the composition.

It was surprisingly found that such flavour compositions provide a particularly advantageous, particularly authentic, meat-like taste. It was unexpectedly found that the flavour compositions according to the invention provide a particularly advantageous taste impressions such as "meaty", "fatty", "brothy", "juicy", "roasted", "umami" or "mouthfeel". It was further found that undesired / unpleasant taste impressions, such as "green", "kombu" (i.e. an algae-like taste impression) "fishy", "beany", "earthy", "bitter", and/or "chalky" are reduced in flavour compositions according to the invention.

Preferably, the term "the summed amount of compounds a) to e) is at least 5 parts by weight," is to be understood such that each of the compounds a) to e) must be present and that their summed amount is at least 5 parts by weight. Thus, the term preferably excludes the option 0 parts by weight for any of compounds a) to e). The same applies accordingly to further values for the amount of compounds as described herein and for the indications in wt.-%, where applicable.

The term "the summed amount of compounds f) to i)" includes compounds h) and i), which are described as optional. Thus, the term refers to the amount of compounds f) to g) and - as far as present - compounds h) to i). In case one or both of compounds h) to i) are present in the composition according to the invention, these are considered in the term "the summed amount of compounds f) to i)" for calculating the respective amount. In case none of compounds h) to i) is present in the composition according to the invention, the term "the summed amount of compounds f) to i)" only includes compounds f) to g) for calculating the respective amount.

Preferably, the term "the summed amount of compounds f) to i) is at most 50 parts by weight," is to be understood such that each of the compounds f) to g) must be present, compounds h) to i) are optional and can be present, and that their summed amount does not exceed 50 parts by weight. Thus, the term preferably excludes the option 0 parts by weight for any of compounds f) to g). The same applies accordingly to further values for the amount of compounds as described herein and for the indications in wt.-%, where applicable.

It is preferred in the flavour composition according to the invention that the summed amount of compounds f) to g) is at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition,
preferably, the summed amount of compounds f) to g) is at most 40 wt.-%, preferably at most 35 wt.-%, preferably at most 30 wt.-%, preferably at most 25 wt.-%; preferably at most 20 wt.-%, preferably at most 15 wt.-%, based on the total weight of the composition.

Furthermore, it is preferred in the flavour composition according to the invention that the summed amount of compounds h) to i) is at most 5.5 parts by weight, preferably at most 5 parts by weight, preferably at most 4.5 parts by weight, preferably at most 4 parts by weight, preferably at most 3.5 parts by weight, preferably at most 3 parts by weight, preferably at most 2.75 parts by weight, based on the total weight of the composition,
preferably, the summed amount of compounds h) to i) is at most 5.5 wt.-%, preferably at most 5 wt.-%, preferably at most 4.5 wt.-%, preferably at most 4 wt.-%, preferably at most 3.5 wt.-%, preferably at most 3 wt.-%, preferably at most 2.75 wt.-%, based on the total weight of the composition.

Preferably, the term "the summed amount of compounds h) to i) is at most 5.5 parts by weight," is to be understood such that none, one, two or all of the compounds h) to i) are present, and that their summed amount does not exceed 5.5 parts by weight. Thus, the term preferably includes the option 0 parts by weight for each of compounds h) to i). The same applies accordingly for the indications in wt.-%.

It is preferred in the flavour composition according to the invention that the composition comprises at least 15 parts by weight, preferably at least 20 parts by weight, preferably at least 25 parts by weight compound a), based on the total weight of the composition.

Additionally or alternatively, it is preferred in the flavour composition according to the invention that the composition comprises at least 1.5 parts by weight, preferably at least 2 parts by weight, preferably at least 2.5 parts by weight compound b), based on the total weight of the composition.

Additionally or alternatively, it is preferred in the flavour composition according to the invention that the composition comprises at least 1.5 parts by weight, preferably at least 2 parts by weight, preferably at least 2.5 parts by weight compound c), based on the total weight of the composition.

Additionally or alternatively, it is preferred in the flavour composition according to the invention that the composition comprises at least 1 parts by weight, preferably at least 2 parts by weight, preferably at least 3 parts by weight, preferably at least 4 parts by weight, compound d), based on the total weight of the composition.

Additionally or alternatively, it is preferred in the flavour composition according to the invention that the composition comprises at least 1 parts by weight, preferably at least 1.5 parts by weight, preferably at least 2 parts by weight compound e), based on the total weight of the composition.

Furthermore, it is preferred in the flavour composition according to the invention that the composition comprises
at least 15 parts by weight, preferably at least 20 parts by weight, preferably at least 25 parts by weight compound a), based on the total weight of the composition, and
at least 1.5 parts by weight, preferably at least 2 parts by weight, preferably at least 2.5 parts by weight compound b), based on the total weight of the composition, and
at least 1.5 parts by weight, preferably at least 2 parts by weight, preferably at least 2.5 parts by weight compound c), based on the total weight of the composition, and
at least 1 parts by weight, preferably at least 2 parts by weight, preferably at least 3 parts by weight, preferably at least 4 parts by weight, compound d), based on the total weight of the composition, and
at least 1 parts by weight, preferably at least 1.5 parts by weight, preferably at least 2 parts by weight compound e), based on the total weight of the composition.

It is preferred in the flavour composition according to the invention that the composition comprises at least 15 wt.-%, preferably at least 20 wt.-%, preferably at least 25 wt.-% compound a), based on the total weight of the composition.

Additionally or alternatively, it is preferred in the flavour composition according to the invention that the composition comprises at least 1.5 wt.-%, preferably at least 2 wt.-%, preferably at least 2.5 wt.-% compound b), based on the total weight of the composition.

Additionally or alternatively, it is preferred in the flavour composition according to the invention that the composition comprises at least 1.5 wt.-%, preferably at least 2 wt.-%, preferably at least 2.5 wt.-% compound c), based on the total weight of the composition.

Additionally or alternatively, it is preferred in the flavour composition according to the invention that the composition comprises at least 1 wt.-%, preferably at least 2 wt.-%, preferably at least 3 wt.-%, preferably at least 4 wt.-%, compound d), based on the total weight of the composition.

Additionally or alternatively, it is preferred in the flavour composition according to the invention that the composition comprises at least 1 wt.-%, preferably at least 1.5 wt.-%, preferably at least 2 wt.-% compound e), based on the total weight of the composition.

Furthermore, it is preferred in the flavour composition according to the invention that the composition comprises
at least 15 wt.-%, preferably at least 20 wt.-%, preferably at least 25 wt.-% compound a), based on the total weight of the composition, and
at least 1.5 wt.-%, preferably at least 2 wt.-%, preferably at least 2.5 wt.-% compound b), based on the total weight of the composition, and
at least 1.5 wt.-%, preferably at least 2 wt.-%, preferably at least 2.5 wt.-% compound c), based on the total weight of the composition, and
at least 1 wt.-%, preferably at least 2 wt.-%, preferably at least 3 wt.-%, preferably at least 4 wt.-%, compound d), based on the total weight of the composition, and
at least 1 wt.-%, preferably at least 1.5 wt.-%, preferably at least 2 wt.-% compound e), based on the total weight of the composition.

Moreover, it is preferred in the flavour composition according to the invention that the composition comprises at most 35 parts by weight, preferably at most 30 parts by weight, preferably at most 25 parts by weight, preferably at most 20 parts by weight, preferably at most 15 parts by weight, preferably at most 10 parts by weight, preferably at most 5 parts by weight compound f), based on the total weight of the composition.

Additionally or alternatively, it is preferred in the flavour composition according to the invention that the composition comprises at most 8.25 parts by weight, preferably at most 8 parts by weight, preferably at most 7.5 parts by weight compound g), based on the total weight of the composition.

Furthermore, it is preferred in the flavour composition according to the invention that the composition comprises
at most 35 parts by weight, preferably at most 30 parts by weight, preferably at most 25 parts by weight, preferably at most 20 parts by weight, preferably at most 15 parts by weight, preferably at most 10 parts by weight, preferably at most 5 parts by weight compound f), based on the total weight of the composition, and
at most 8.25 parts by weight, preferably at most 8 parts by weight, preferably at most 7.5 parts by weight compound g), based on the total weight of the composition.

Moreover, it is preferred in the flavour composition according to the invention that the composition comprises at most 35 wt.-%, preferably at most 30 wt.-%, preferably at most 25 wt.-%, preferably at most 20 wt.-%, preferably at most 15 wt.-%, preferably at most 10 wt.-%, preferably at most 5 wt.-% compound f), based on the total weight of the composition.

Additionally or alternatively, it is preferred in the flavour composition according to the invention that the composition comprises at most 8.25 wt.-%, preferably at most 8 wt.-%, preferably at most 7.5 wt.-% compound g), based on the total weight of the composition.

Furthermore, it is preferred in the flavour composition according to the invention that the composition comprises
at most 35 wt.-%, preferably at most 30 wt.-%, preferably at most 25 wt.-%, preferably at most 20 wt.-%, preferably at most 15 wt.-%, preferably at most 10 wt.-%, preferably at most 5 wt.-% compound f), based on the total weight of the composition, and
at most 8.25 wt.-%, preferably at most 8 wt.-%, preferably at most 7.5 wt.-% compound g), based on the total weight of the composition.

As described above, the term "at most" as used in this context preferably excludes the option 0 parts by weight for any of compounds f) to g).

As described above, the term "at most" as used in this context preferably excludes the option 0 wt.-% for any of compounds f) to g).

Additionally or alternatively, it is preferred in the flavour composition according to the invention that the composition comprises at most 1 parts by weight, preferably at most 0.5 parts by weight, preferably at most 0.25 parts by weight compound h), based on the total weight of the composition.

Additionally or alternatively, it is preferred in the flavour composition according to the invention that the composition comprises at most 4 parts by weight, preferably at most 3 parts by weight, preferably at most 2.75 parts by weight compound i), based on the total weight of the composition.

Additionally or alternatively, it is preferred in the flavour composition according to the invention that the composition comprises at most 1 wt.-%, preferably at most 0.5 wt.-%, preferably at most 0.25 wt.-% compound h), based on the total weight of the composition.

Additionally or alternatively, it is preferred in the flavour composition according to the invention that the composition comprises at most 4 wt.-%, preferably at most 3 wt.-%, preferably at most 2.75 wt.-% compound i), based on the total weight of the composition.

Preferably, the flavour composition according to the invention is in a liquid form, particularly a form that can be incorporated into a semi-finished product, as described herein.

Preferably, the flavour composition according to the invention can also be transferred into a solid form, e.g. by means of (spray) drying, or can be present in solid form, particularly a form that can be incorporated into a semi-finished product, as described herein. Methods suitable therefore are sufficiently known to the skilled person.

Preferably, the term "parts by weight" as used herein refers to wt.-%.

The present invention further relates to a method for producing a flavour composition, preferably a flavour composition according to the invention, the method comprising the steps
i) providing seaweed and mixing the seaweed with water,
ii) heating the mixture obtained in step i) to a temperature in the range of from 100 to 140 °C and maintaining the temperature for a time in the range of from 0.5 to 8 h, preferably 1 to 4 h,
iii) providing
   iii.a) a sugar source, preferably a natural sugar source or a sugar source on natural basis, preferably a sugar source selected from the group consisting of agave syrup, barley malt syrup, date syrup, fig syrup, honey, maple syrup, rice syrup, fruit juice concentrate, preferably fruit juice concentrate from apple or pear or mixtures thereof, vegetable juice concentrate, preferably vegetable juice concentrate from onion or carrot or mixtures thereof, and mixtures thereof,
   iii.b) tomato concentrate, preferably tomato serum, and
   iii.c) vegetable oil,
iv) adding the provided components of step iii) to the mixture obtained after step ii), either simultaneously or subsequently,
v) heating the mixture obtained in step iv) to a temperature in the range of from 100 to 140 °C, preferably 105 to 135 °C, preferably 110 to 130 °C, preferably 115 to 125 °C to allow a Maillard reaction and maintaining the temperature for a time in the range of from 0.5 to 8 h, preferably 1 to 4 h,
vi) filtering the mixture obtained after step v) and collecting the filtrate to obtain a liquid seaweed preparation,
vii) providing a food carrier, preferably a food carrier selected from the group consisting of cornstarch, onion concentrate, preferably onion powder, flours, fibers, preferably oat fibers or wheat fibers or mixtures thereof, meat powder, vegetable powder, and mixtures thereof,
viii) adding the provided food carrier of step vii) to the liquid seaweed preparation obtained in step vi),
ix) drying the mixture obtained after step viii).

Preferably, the term "seaweed" refers to macroscopic, multicellular, marine algae, preferably of a division selected from *Rhodophyta, Phaeophyta* and *Chlorophyta,* preferably of a genus selected from *Codium, Caulerpa, Fucus, Gracilaria, Laminaria, Macrocystis, Mo-nostroma, Palmaria, Porphyra, Sargassum, Ulva,* and mixtures thereof, preferably of the genus *Fucus* and/or *Codium,* preferably to the species *Fucus serratus, Fucus vesiculosus, Fucus spiralis, Codium tomentosum, Palmaria palmatain, Ulva Lactuca, Porphyra umbili-calis, Gracilaria gracilis,* and mixtures thereof. Particularly preferably, the term "seaweed" refers to the species *Fucus serratus, Fucus vesiculosus, Fucus spiralis, Codium tomentosum* and mixtures thereof, especially preferably to the species *Fucus serratus, Codium tomentosum* and mixtures thereof, further preferably to the species *Fucus serratus.*

Preferably, the term "maintaining the temperature" e.g. as in step ii) or v) of the method according to the invention is to be understood such that the temperature is maintained within the range of from 100 to 140 °C, it is not required that the particular temperature to which it was heated in step ii) is maintained.

For example, the mixture may be heated to 110 °C for 4 hours, or to 120 °C for 2 hours, or to 130 °C for 1 hour, in step ii) and/or v) of the method according to the invention.

The term "sugar source" refers to any source providing sugars, i.e. mono-, di-, oligo- and/or polysaccharides, preferably sucrose, maltose, dextrose, glucose, fructose, xylose and/or arabinose. Preferably the term "sugar source" excludes any animal-based source, such as a source obtained from an animals body, such that the sugar source is then considered vegetarian. Preferably the term "sugar source" excludes any animal-derived source, such as a source of animal origin, such that the sugar source is then considered vegan.

The term "adding simultaneously" e.g. as in step iv) of the method according to the invention can refer to the simultaneous addition of the separate components but can also refer to the possibility that two or more or all components are first mixed and then added in step iv).

The term "to allow a Maillard reaction" e.g. as in step v) of the method according to the invention preferably refers to providing the chemical conditions for a Maillard reaction to take place, preferably the term excludes methods steps intended to prevent a Maillard reaction.

The filtering in step vi) preferably removes the seaweed still present in the mixture obtained after step v) (e.g. seaweed powder, for example in case the seaweed was provided as a powder in step i)) and the remaining mixture is collected and considered a liquid seaweed preparation. Preferably, for this filtering step, a filter with a mesh size of from 30 to 70 preferably of from 35 to 65 µm, preferably of from 40 to 60 µm, preferably of from 45 to 55 µm is used.

Preferably, after filtering, the liquid seaweed preparation has a dry matter content of up to 40 parts by weight%, preferably up to 35 parts by weight%, preferably up to 30 parts by weight%, preferably up to 25 parts by weight%, based on the total weight of the seaweed preparation.

Preferably, after filtering, the liquid seaweed preparation has a dry matter content of up to 40 wt.-%, preferably up to 35 wt.-%, preferably up to 30 wt.-%, preferably up to 25 wt.-%, based on the total weight of the seaweed preparation.

Preferably, the dry matter content is measured by subtracting the water content from the total weight of the preparation, for which the dry matter content shall be determined. Preferably, the water content is determined by a halogen moisture analyser.

Preferably, the dry matter content, as used herein, refers to the soluble dry matter content.

The food carrier provided in step vii) is preferably a suitable food carrier for the drying step ix), preferably a suitable food carrier required for the drying step ix). Preferably, the food carrier is a solid carrier, preferably in powder form.

Preferably, the food carrier is cornstarch and onion concentrate, preferably cornstarch and onion powder.

Preferably, in case the food carrier is or includes onion concentrate or onion powder, the amount of onion concentrate or onion powder added in step viii) is such that no onion flavour is provided by the onion concentrate or onion powder in the mixture.

In case the food carrier added in step viii) is more than one substance, the adding in step viii) can refer to the simultaneous addition or the subsequent addition of the separate substances but can also refer to the possibility that two or more or all substances are first mixed and then added in step viii).

The drying in step ix) is preferably performed by a method selected from the group consisting of heat drying, sun drying, hot air drying, drum drying, heat pump drying, combined air and heat pump drying, vacuum oven drying, freeze drying, spray drying, and (vacuum) belt drying.

Preferably, the mixture obtained after step viii) is dried in step ix) to obtain a dried mixture. Preferably the drying is performed until a residual water content of at most 7.5 parts by weight%, preferably at most 6 parts by weight%, preferably at most 5 parts by weight%, based on the total weight of the dried mixture.

Preferably, the mixture obtained after step viii) is dried in step ix) to obtain a dried mixture. Preferably the drying is performed until a residual water content of at most 7.5 wt.-%, preferably at most 6 wt.-%, preferably at most 5 wt.-%, based on the total weight of the dried mixture.

The drying is preferably performed at a temperature in a range of from 100 to 180 °C, preferably in a range of from 110 to 170 °C, preferably in a range of from 120 to 160 °C. Additionally or alternatively, the drying is preferably performed for a time in the range of from 0.5 to 15 min, preferably in the range of from 0.75 min to 10 min, preferably in the range of from 1 to 5 min. The drying process effects a stabilization of the flavour composition. Reducing the water content prevents or reduces the degradation of its contents. Due to the drying process, the flavour composition can be stored and a further processing step directly after obtaining flavour composition is not compulsory.

Preferably in the method according to the invention, the method further includes the step
x) milling the dried mixture obtained after step ix).

It is preferred that the milling process in step x) is performed by means of an impact mill. Preferably, after milling the average particle size is at most 500 µm, preferably at most 450 µm, preferably at most 400 µm, preferably at most 350 µm, preferably at most 325 µm. Preferably, after milling the average particle size is in a range of from 0.5 to 500 µm, preferably in a range of from 10 to 400 µm, preferably in a range of from 20 to 350 µm, preferably in a range of from 30 to 325 µm preferably in a range of from 40 to 300 µm.

It is preferred in the method according to the invention that in the mixture obtained in step i), the pH is adjusted to a pH in the range of from 6.5 to 9.5, preferably in the range of from 7 to 9, particularly preferably in the range of from 7.5 to 8.5 before step ii) is performed.

Additionally or alternatively, it is preferred in the method according to the invention that in the mixture obtained in step ii) or iv), the pH is adjusted to a pH in the range of from 3.5 to 6.5, preferably in the range of from 4 to 6, particularly preferably in the range of from 4.5 to 5.5, before step v) is performed.

Additionally or alternatively, it is preferred in the method according to the invention that in the mixture obtained after step vi), the pH is adjusted to a pH in the range of from 4.5 to 7.5, preferably in the range of from 5 to 7, preferably in the range of from 5.5 to 6.5, preferably before step ix) is performed.

It is preferred in the method according to the invention that the weight ratio of the added sugar source to the seaweed present in the mixture obtained after step i) is in a range of from 1:1 to 1:5, preferably in a range of from 1:1.25 to 1:4, preferably in a range of from 1:1.5to 1:3, preferably in a range of from 1:1.75 to 1:2.5.

Additionally or alternatively, it is preferred in the method according to the invention that the weight ratio of the added tomato concentrate to the seaweed present in the mixture obtained after step i) is in a range of from 1:1 to 1:5, preferably in a range of from 1:1.25 to 1:4, preferably in a range of from 1:1.5 to 1:3, preferably in a range of from 1:1.75 to 1:2.5.

Additionally or alternatively, it is preferred in the method according to the invention that the weight ratio of the added vegetable oil to the seaweed present in the mixture obtained after step i) is in a range of from 1:1 to 1:5, preferably in a range of from 1:1.25 to 1:4, preferably in a range of from 1:1.5 to 1:3, preferably in a range of from 1:1.75 to 1:2.5.

Preferably, the term "vegetable oil" refers to a vegetable oil that is pourable at 20° C, preferably the term refers to a vegetable oil selected from the group consisting of borage oil, thistle oil, peanut oil, hazelnut oil, coconut oil, pumpkin seed oil, linseed oil, corn oil, mac-adamia nut oil, almond oil, olive oil, palm kernel oil, pecan nut oil, pistachio kernel oil, rapeseed oil, rice germ oil, sesame oil, soybean oil, sunflower oil, walnut oil, wheat germ oil fractions, and mixtures thereof.

For determining the weight of the seaweed present in the mixture obtained after step i), a skilled person needs to determine the weight of the seaweed provided in step i), typically by weighing the provided seaweed.

It is preferred in the method according to the invention that all added and/or used and/or provided components are free of meat.

Preferably the term "meat" includes fish.

Preferably the term "meat" does not include fish.

It is preferred in the method according to the invention that none of the added and/or used and/or provided components is or comprises meat or is animal-derived. The term "animal-derived" as used in this context, is to be understood as obtained from an animal source, particularly from meat of an animal.

Furthermore, the present invention relates to a flavour composition, preferably flavour composition according to the invention, produced or producible by a method according to the invention.

It was surprisingly found that in a flavour composition produced or producible by a method according to the invention, several off-notes could be strongly reduced in comparison to a seaweed extract, even though the seaweed extract already provided an increased meat-like taste (Example 4). Thus, the method according to the invention provides that the obtained flavour composition according to the invention has an improved taste profile, e.g. by strongly reducing off-tastes such as "green", "fishy" and/or "Kombu" notes.

What was said above with regard to the flavouring composition according to the invention applies accordingly, where applicable.

Further, the invention relates to a semi-finished product comprising a flavour composition according to the invention.

Preferably, the semi-finished product comprises the flavour composition in a range of from 0.25 to 20 parts by weight%, preferably of from 0.5 to 15 parts by weight%, preferably of from 1 to 10 parts by weight%, based on the total weight of the semi-finished product.

Preferably, the semi-finished product comprises the flavour composition in a range of from 0.25 to 20 wt.-%, preferably of from 0.5 to 15 wt.-%, preferably of from 1 to 10 wt.-%, based on the total weight of the semi-finished product.

Preferably, a semi-finished product refers to a substance, product or good that has not completed the manufacturing or production process and is not ready for sale to or use or consumption by consumers and/or clients in the food service or catering industry. Thus, a semi-finished product preferably refers to a product, good or article that is intended for further industrial processing and/or use in industrial processing.

Preferably, a semi-finished product is to be understood as a product which is unsuitable for use as a ready-to-eat foodstuff. Only by mixing with at least one other ingredient (i.e., by reducing the concentration of the flavouring composition) and optionally further processing steps (e.g., heating, freezing) is the semi-finished product converted into a ready-to-eat food.

Preferably, semi-finished products are selected from substances, products or goods intended for use in food products, such as extracts, mash, powder, oil or paste made from vegetables or fruit, spices, toppings, seasoning mixes, granulated or pulverized foodstuffs.

Furthermore, the present invention relates to a use of a flavour composition according to the invention for imparting or enhancing a savoury and/or meaty flavour in a semi-finished product.

Moreover, the present invention relates to a method imparting or enhancing a savoury and/or meaty flavour in a semi-finished product, comprising the steps
i) providing a flavour composition according to the invention,
ii) adding the flavour composition provided in step i) to a semi-finished product.

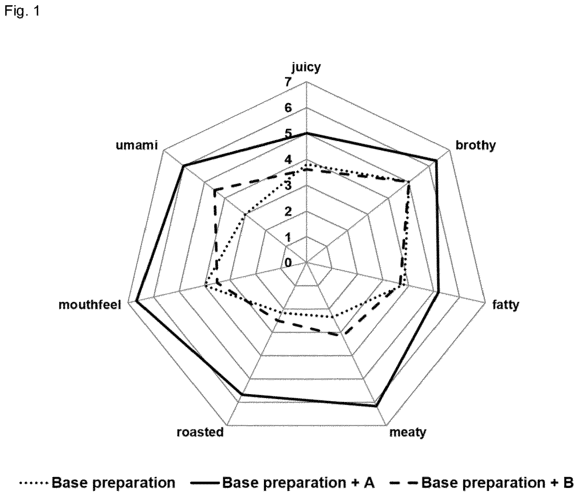

Fig. 1 shows the results of the sensory evaluation of Example 3, comparing a base preparation (dotted line), a base preparation with a flavouring composition according to the invention (base preparation + A, continuous line) and a base preparation with a flavouring composition as comparative example (base preparation + B, dashed line).

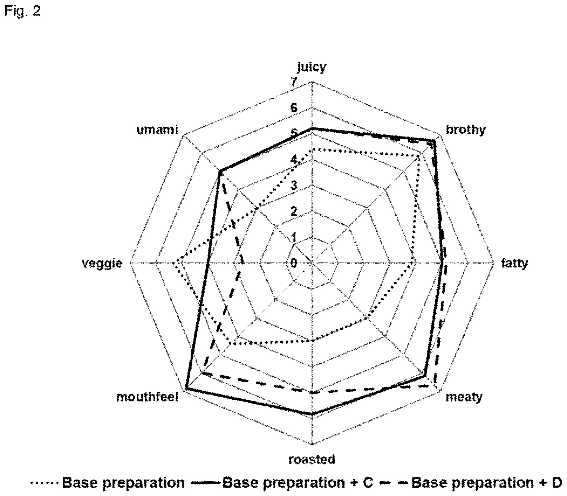

Fig. 2 shows the results of the sensory evaluation of Example 4, comparing a base preparation (dotted line), a base preparation with a flavouring composition according to the invention (base preparation + C, continuous line) and a base preparation with a meat-derived beef meat powder as comparative example (base preparation + D, dashed line).

The present invention, preferred embodiments thereof and several aspects in connection therewith will be described below in the form of selected examples.

### Examples

### Example 1: Producing a flavouring composition

111 g seaweed powder (Fucus serratus) were provided and mixed with 664g water. The pH of the resulting mixture was adjusted to pH = 8 with 0.45 % NaOH.

The obtained mixture was heated to 120 °C for 2 h.

50 g agave syrup, 49.5 g tomato serum and 55 g vegetable oil were provided and added to the remaining mixture of above. Subsequently, the pH of the resulting mixture was adjusted to pH = 5 with 6.6 % lemon juice concentrate. The mixture was heated to 120 °C for 2 h and subsequently filtered with a filter press to remove the remaining seaweed.

A liquid seaweed preparation with a dry matter content of 20 wt.-% was obtained. The pH value measured for this preparation was at pH = 3.7.

The pH of the preparation was adjusted to pH = 6 with 2.2 % NaOH.

250 g cornstarch and 50 g onion powder were provided and added to the obtained liquid seaweed preparation.

The obtained mixture was subsequently dried to a dry matter content in a range of from 96 to 99 wt.-% to obtain a dried seaweed preparation.

### Example 2: Producing a flavouring composition (comparative example)

111 g seaweed powder (Fucus serratus) were provided and mixed with 664g water. The pH of the resulting mixture was adjusted to pH = 8 with 0.45 % NaOH.

The obtained mixture was heated to 120 °C for 2 h.

The mixture was collected and filtered with a filter press. A filtrate with a dry matter content of 5 wt.-% was obtained (comparative sample).

### Example 3: Analysis of components

A preparation A was produced as described in Example 1.

A preparation B was produced as described in Example 2.

Furthermore, the seaweed powder initially provided in Examples 1 and 2 was provided as preparation C.

All preparations were analysed for their components via HPLC.

| | **A [wt.-%]** | **B (comparative example) [wt.-%]** | **C (comparative example) [wt.-%]** |
|---|---|---|---|
| Compound a), 2-methylbutyraldehyde | 26.06 | 0.13 | -- |
| Compound b), 5-methylfurfural | 2.87 | 0.07 | -- |
| Compound c), furfural | 2.71 | -- | -- |
| Compound d), 2(E)-decenal | 4.66 | -- | 0.39 |
| Compound e), isobutyr aldehyde | 2.37 | -- | -- |
| Compound f), myristic acid | 2.35 | 53.87 | 44.14 |
| Compound g), palmitic acid | 7.32 | 16.75 | 8.49 |
| Compound h), lauric acid | -- | 1.02 | 1.16 |
| Compound i), oleic acid | 2.55 | 5.65 | 4.48 |
| Sum a) to e) | 38.67 | 0.19 | 0.39 |
| Sum f) to g) | 9.67 | 70.65 | 52.63 |
| Sum h) to i) | 2.55 | 6.67 | 5.64 |
| Sum f) to i) | 12.22 | 77.32 | 58.27 |

A plenty of further components of the preparations were either concentrated too low to be considered to have an impact on taste characteristics or were present in rather similar amounts between the (or some of the) compositions and were thus considered not to contribute to the advantageous characteristics of the flavour composition according to the invention.

### Example 4: Sensory evaluation

### Example 4.1: Comparison to other seaweed extract

A preparation A was produced as described in Example 1 (according to the invention).

A preparation B was produced as described in Example 2.

1.96 g of a bouillon base was provided, the bouillon base having the following recipe:

| **Ingredient** | **Amount [wt.-%]** |
|---|---|
| Salt | 39.5 |
| Starch | 40.1 |
| Sugar | 4.3 |
| Oil | 3.8 |
| Vegetables | 5.8 |
| Spices | 0.2 |
| Herbs | 0.2 |
| Yeast extract | 6.1 |

0.04 g of preparation A or B was added to the bouillon base, which was then filled up with water to 100 g. As a control, 2g of the bouillon base was provided and filled up with water up to 100 g. Consent tasting and determination of several taste impressions was performed by an expert panel of 12 panellists. The evaluation was based on the descriptors "meaty", "roasted", "mouthfeel", "umami", "juicy", "brothy" and "fatty". The results are also shown in Fig. 1.

| | Bouillon base | Bouillon base + A | Bouillon base + B |
|---|---|---|---|
| Meaty | 2.3 | 6.2 | 3.2 |
| Roasted | 2.2 | 5.7 | 2.5 |
| Mouthfeel | 4.0 | 6.7 | 3.5 |
| Umami | 3.0 | 6.0 | 4.5 |
| Juicy | 3.8 | 5.0 | 3.6 |
| Brothy | 5.0 | 6.3 | 5.0 |
| fatty | 3.8 | 5.2 | 3.7 |

A meaty, slightly roasted and umami taste was provided to the base product by preparation B. However, it was surprisingly found that preparation A provided strong increases in all tested taste descriptors (see also Fig. 1).

Moreover, it was surprisingly found that "green", "fishy" and "Kombu" notes, which were observed for the base product including preparation B, were not or almost not observed for the base product including preparation A.

### Example 4.2: Comparison to a meat flavour

A preparation C was produced as described in Example 1 (according to the invention).

A beef meat powder obtained from meat was provided as preparation D

1.96 g of a bouillon base was provided, the bouillon base having the following recipe:

| **Ingredient** | **Amount [wt.-%]** |
|---|---|
| Salt | 39.5 |
| Starch | 40.1 |
| Sugar | 4.3 |
| Oil | 3.8 |
| Vegetables | 5.8 |
| Spices | 0.2 |
| Herbs | 0.2 |
| Yeast extract | 6.1 |

0.04 g of preparation C or D was added to the bouillon base, which was then filled up with water to 100 g. As a control, 2g of the bouillon base was provided and filled up with water up to 100 g. Consent tasting and determination of several taste impressions was performed by an expert panel of 12 panellists. The evaluation was based on the descriptors "meaty", "roasted", "mouthfeel", "veggie", "umami", "juicy", "brothy" and "fatty". The results are also shown in Fig. 2.

| | Bouillon base | Bouillon base + C | Bouillon base + D |
|---|---|---|---|
| Meaty | 3.0 | 6.2 | 6.7 |
| Roasted | 3.0 | 5.8 | 5.0 |
| Mouthfeel | 4.4 | 6.8 | 6.0 |
| Veggie | 5.3 | 4.0 | 2.7 |
| Umami | 3.0 | 5.0 | 5.0 |
| Juicy | 4.4 | 5.2 | 5.2 |
| Brothy | 5.8 | 6.7 | 6.5 |
| fatty | 3.8 | 5.0 | 5.2 |

It was surprisingly found that preparation C provided almost the same meaty flavour as the meat-derived beef meat powder. Furthermore, preparation D provided similar sensory results as the meat-derived beef meat powder.

## Claims

1. Flavour composition for imparting or enhancing a savoury and/or meaty flavour,
the composition comprising at least three components, preferably at least four components, preferably all components, selected from the group consisting of 2-methylbutyraldehyde, 5-methylfurfural, furfural, 2(E)-decenal, and isobutyr aldehyde.

2. Flavour composition according to claim 1, the composition further comprising myristic acid and/or palmitic acid
and/or
the composition further comprising lauric acid and/or oleic acid.

3. Flavour composition according to any one of claims 1 or 2, the composition comprising
a) 2-methylbutyraldehyde,
b) 5-methylfurfural,
c) furfural,
d) 2(E)-decenal,
e) isobutyr aldehyde,
f) myristic acid,
g) palmitic acid, and
h) optionally: lauric acid, and
i) optionally: oleic acid,
wherein the summed amount of compounds a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the composition,
wherein the summed amount of compounds f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, based on the total weight of the composition.

4. Flavour composition according to any one of the preceding claims, wherein the summed amount of compounds f) to g) is at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition.

5. Flavour composition according to any one of the preceding claims, wherein the summed amount of compounds h) to i) is at most 5.5 parts by weight, preferably at most 5 parts by weight, preferably at most 4.5 parts by weight, preferably at most 4 parts by weight, preferably at most 3.5 parts by weight, preferably at most 3 parts by weight, preferably at most 2.75 parts by weight, based on the total weight of the composition.

6. Flavour composition according to any one of the previous claims, comprising
at least 15 parts by weight, preferably at least 20 parts by weight, preferably at least 25 parts by weight compound a), based on the total weight of the composition, and
at least 1.5 parts by weight, preferably at least 2 parts by weight, preferably at least 2.5 parts by weight compound b), based on the total weight of the composition, and
at least 1.5 parts by weight, preferably at least 2 parts by weight, preferably at least 2.5 parts by weight compound c), based on the total weight of the composition, and
at least 1 parts by weight, preferably at least 2 parts by weight, preferably at least 3 parts by weight, preferably at least 4 parts by weight, compound d), based on the total weight of the composition, and
at least 1 parts by weight, preferably at least 1.5 parts by weight, preferably at least 2 parts by weight compound e), based on the total weight of the composition.

7. Flavour composition according to any one of the previous claims, comprising
at most 35 parts by weight, preferably at most 30 parts by weight, preferably at most 25 parts by weight, preferably at most 20 parts by weight, preferably at most 15 parts by weight, preferably at most 10 parts by weight, preferably at most 5 parts by weight compound f), based on the total weight of the composition, and
at most 8.25 parts by weight, preferably at most 8 parts by weight, preferably at most 7.5 parts by weight compound g), based on the total weight of the composition.

8. Method for producing a flavour composition, preferably a flavour composition according to any one of claims 1 to 7, the method comprising the steps
i) providing seaweed and mixing the seaweed with water,
ii) heating the mixture obtained in step i) to a temperature in the range of from 100 to 140 °C and maintaining the temperature for a time in the range of from 0.5 to 8 h, preferably 1 to 4 h,
iii) providing
iii.a) a sugar source, preferably a natural sugar source or a sugar source on natural basis, preferably a sugar source selected from the group consisting of agave syrup, barley malt syrup, date syrup, fig syrup, honey, maple syrup, rice syrup, fruit juice concentrate, preferably fruit juice concentrate from apple or pear or mixtures thereof, vegetable juice concentrate, preferably vegetable juice concentrate from onion or carrot or mixtures thereof, and mixtures thereof,
iii.b) tomato concentrate, preferably tomato serum, and
iii.c) vegetable oil,
iv) adding the provided components of step iii) to the mixture obtained after step ii), either simultaneously or subsequently,
v) heating the mixture obtained in step iv) to a temperature in the range of from 100 to 140 °C to allow a Maillard reaction and maintaining the temperature for a time in the range of from 0.5 to 8 h, preferably 1 to 4 h,
vi) filtering the mixture obtained after step v) and collecting the filtrate to obtain a liquid seaweed preparation,
vii) providing a food carrier, preferably a food carrier selected from the group consisting of cornstarch, onion concentrate, preferably onion powder, flours, fibers, preferably oat fibers or wheat fibers or mixtures thereof, meat powder, vegetable powder, and mixtures thereof,
viii) adding the provided food carrier of step vii) to the liquid seaweed preparation obtained in step vi),
ix) drying the mixture obtained after step viii).

9. Method according to claim 8, further including the step
x) milling the dried mixture obtained after step ix).

10. Method according to claim 8 or 9,
wherein in the mixture obtained in step i), the pH is adjusted to a pH in the range of from 6.5 to 9.5, preferably in the range of from 7 to 9, particularly preferably in the range of from 7.5 to 8.5 before step ii) is performed,
and/or
wherein in the mixture obtained in step ii) or iv), the pH is adjusted to a pH in the range of from 3.5 to 6.5, preferably in the range of from 4 to 6, particularly preferably in the range of from 4.5 to 5.5, before step v) is performed.

11. Method according to any one of claims 8 to 10, wherein in step iv),
the weight ratio of the added sugar source to the seaweed present in the mixture obtained after step i) is in a range of from 1:1 to 1:5, preferably in a range of from 1:1.25 to 1:4, preferably in a range of from 1:1.5 to 1:3, preferably in a range of from 1:1.75 to 1:2.5, and/or
the weight ratio of the added tomato concentrate to the seaweed present in the mixture obtained after step i) is in a range of from 1:1 to 1:5, preferably in a range of from 1:1.25 to 1:4, preferably in a range of from 1:1.5 to 1:3, preferably in a range of from 1:1.75 to 1:2.5, and/or
the weight ratio of the added vegetable oil to the seaweed present in the mixture obtained after step i) is in a range of from 1:1 to 1:5, preferably in a range of from 1:1.25 to 1:4, preferably in a range of from 1:1.5 to 1:3, preferably in a range of from 1:1.75 to 1:2.5.

12. Flavour composition, preferably flavour composition according to any one of claims 1 to 7, produced or producible by a method according to any one of claims 8 to 11.

13. Semi-finished product comprising a flavour composition according to any one of claims 1 to 7 or 12.

14. Use of a flavour composition according to any one of claims 1 to 7 or 12 for imparting or enhancing a savoury and/or meaty flavour in a semi-finished product.

15. Method for imparting or enhancing a savoury and/or meaty flavour in a semi-finished product, comprising the steps
i) providing a flavour composition according to any one of claims 1 to 7 or 12,
ii) adding the flavour composition provided in step i) to a semi-finished product.
